# EUROPEAN PATENT SPECIFICATION

(11) **EP 2 922 769 B1**
(45) Date of publication and mention of the grant of the patent: **02.01.2019**
(21) Application number: 13851944.2
(22) Date of filing: 01.11.2013
(51) Int. Cl.: B65D 81/18, A23L 3/00, A23B 7/148, B65D 81/24

(54) **IMPROVEMENTS IN CONTROL OF GAS COMPOSITION WITHIN A CONTAINER**
VERBESSERUNGEN BEI DER STEUERUNG EINER GASZUSAMMENSETZUNG IN EINEM BEHÄLTER
AMÉLIORATIONS APPORTÉES À L'AJUSTEMENT DE LA COMPOSITION D'UN GAZ DANS UN CONTENANT

(30) Priority: 01.11.2012 AU 2012904815
(43) Date of publication of application: 30.09.2015
(73) Proprietor: Mitsubishi Australia Limited, Mount Waverley, VIC 3149 (AU)
(72) Inventor: SAVUR, Sanjay, Mount Waverley VIC 3149 (AU); JORDAN, Rodney, Mount Waverley VIC 3149 (AU); JONES, Lee, Mount Waverley VIC 3149 (AU)
(74) Representative: Hopley, Joanne Selina
(86) International application number: PCT/AU2013/001269
(87) International publication number: WO 2014/066952

(56) References cited:
- EP-A2- 0 888 804
- WO-A1-2012/149611
- WO-A1-2012/149611
- JP-A- H03 123 414
- JP-A- H03 123 414
- JP-A- H03 232 423
- US-A- 5 332 547
- US-A1- 2003 061 938
- US-A1- 2007 065 546
- US-A1- 2009 185 948
- US-B2- 7 866 258

## Description

### Field of the invention

The present invention relates generally to a method of, and apparatus for, controlling gas composition within a container, particularly for extending the life of perishable goods, for example during transport within the container.

### Background of the invention

In order to prolong the storage life of perishable goods (such as fruit and vegetables) stored in containers during transportation or storage it is generally important to control at least some environmental conditions within the container. This is because environmental parameters, for example temperature and gas composition within the container, affect the rate of respiration and deterioration of goods after harvest.

The conventional method of extending storage life of produce has been to refrigerate the container and to reduce carbon dioxide levels (as carbon dioxide is generated by respiring produce), while maintaining oxygen and nitrogen at desired levels.

Applicant's invention described in WO 2000/023350 entitled 'Apparatus for controlled venting of a chamber' proposed a new approach of adjusting the environment within a chamber containing respiring produce. The method was carried out without monitoring the carbon dioxide level in the chamber and involved monitoring the oxygen level in the chamber and admitting ambient air into the chamber when the oxygen level is detected to have fallen below an oxygen setpoint. Carbon dioxide was removed from the chamber at a predetermined rate by way of a selected quantity of carbon dioxide absorbing material stored within the container. The predetermined rate in the process was selected before the storage/journey such that the carbon dioxide concentration within the chamber would not exceed a predetermined amount.

Other known methods utilise a permeable membrane within the container which is selective for removing certain gases while retaining others. That is, it allows some gases to pass through, whilst excluding certain other gases. The selective membrane is installed in the container as a liner layer which defines a buffer zone which can be opened to the ambient air outside the container, or manipulated in other ways. Imposing a constant partial pressure difference across the membrane has the effect of selective removal of gases into the buffer zone. Such techniques avoid the need for carbon dioxide absorbing materials.

Only certain membranes are useful in providing required permeability to some gases over other gases, and the more commonly available gas separation membranes provide relatively poor selectivity to carbon dioxide. For example, commercially available PDMS membrane (such as that supplied by Medarray) presents relatively low CO₂/O₂ and CO₂/N₂ selectivity, meaning that there can be significant loss of oxygen and nitrogen from the container. This leads to control instability, or lack of equilibrium and resulting difficulty in controlling the container environment.

Further complicating the control of gases in the container is the phenomenon that, even though the total pressure on the feed side of the membrane is higher than that on the sweep side of the membrane, an oxygen (and/or nitrogen) partial pressure difference can draw oxygen back through the membrane during its extraction operation.

In view of the above, it has generally been deemed necessary to develop specialised membranes with high carbon dioxide selectivity, such as that described in WO 2008/017307 entitled 'A gas permeable membrane'.

Further relevant background art is described below for completeness.

WO 2012/149611 A1 is directed to apparatus and methods for controlling atmospheric gas composition within a container. Gas is drawn through a selective membrane element under selected control conditions through the at least one gas outlet and introducing air from outside the container into the container through the at least one gas inlet under selected control conditions to control the relative composition of gases inside the container.

JP H03 123414 A is directed to a freshness retention storage device. The device blocks fruits from the atmosphere and controls the atmospheric gas composition suitable for storage by controlling levels of oxygen, carbon dioxide and nitrogen concentrations.

US 2003/061938 A1 is directed to a storage device that includes a storage chamber enclosing a storage space where oxidisable materials may be placed and a differentially permeable membrane. An air mover, preferably a compressor, feeds gases to the differentially permeable membrane. A cooling element is provided for cooling the temperature within the storage chamber below that of the ambient temperature. The level of oxygen within the storage chamber is thus reduced relative to the level of oxygen in the atmosphere.

US 2007/065546 A1 is directed to an apparatus for controlling the composition of gases in a container. The apparatus comprises a permeable membrane adapted to facilitate the transportation of different molecular species as parts of gases contained in the atmosphere through the membrane at different rates. The incorporation of the membrane to provide gas concentrations at different rates is key to prolonging the life of the produce based on sensors that give readings of composition of the gas or atmosphere in the cargo and/or buffer zone, which active pumps, vents, blowers etc.

US 5,332,547 A is directed to a device for maintaining a controlled atmosphere in a sealed container. The device controls oxygen and carbon dioxide levels within the container and utilizes permeable membrane technology to control such levels. The device includes an air sampling system which is used to periodically measure the oxygen and carbon dioxide levels within the container. Oxygen and carbon dioxide sensors determine levels in the container and drive the system that maintains a controlled atmosphere in the container.

The present invention provides a new method of controlling the environment in a container, and a new container apparatus,

### Summary of the invention

According to one aspect of the present invention there is provided a method of controlling gas composition within a container containing respiring produce, the container including at least one gas outlet and at least one gas inlet, the method including:
drawing a selected gas from within the container through a selective membrane element so that the selected gas is drawn from the container through the at least one gas outlet;
characterised in that the method further includes the steps of:
measuring pressure inside the container at selected time intervals so as to calculate a rate of internal pressure change over time;
estimating an air leak flow using the rate of internal pressure change over time; and
introducing air under selected control conditions from outside the container into the container through the at least one gas inlet in response to the estimated air leak flow to control the relative composition of gases inside the container.

In one preferred form, the pressure measuring step may further include another step of responding to a change in pressure with a pressure-responsive member to actuate a control element. The pressure-responsive member may include a diaphragm, membrane, leaf or other suitable means.

The pressure measuring step may further include movement of an actuator by the pressure-responsive member for actuation of a valve or gate or opening, iris or aperture to commence the air introducing step.

Preferably the pressure is measured with a meter or other suitable device.

The introduction of ambient air may include the step of varying the air flow through the at least one gas inlet. Suitable means for varying the air flow through the gas inlet include forced induction by a fan or blower, or by opening an orifice, or opening a valve, or varying the size of an inlet aperture or varying the number of gas inlets in operation by exposing one or more of a plurality of gas apertures.

Preferably the inlet aperture is controlled by a valve. The valve may be in the form of a solenoid valve. In alternative arrangements the valve is a continuously variable valve orifice driven by a stepper motor or barrier for exposing an array of through holes.

Preferably the selected gas drawn from the container by the selective membrane element is carbon dioxide.

Preferably the gas drawing step includes selectively drawing carbon dioxide through the membrane element, which can be considered a forced permeation conducted by a fan, blower, or other powered gas drawing means, such that carbon dioxide gas is extracted from the container at a higher rate than other gases present within the container, in particular in relation to oxygen and nitrogen present in the container.

Preferably the method further includes the step of monitoring levels of one or more gas components inside the container to provide one or more gas component level readings. In a preferred embodiment the monitoring step includes monitoring of oxygen.

The air-introducing step may also be conducted in response to the one or more gas component level readings. In one particularly preferred embodiment the gas component level reading is the oxygen level but could be carbon dioxide, nitrogen, or one or more minor components of the container atmosphere, such as carbon monoxide, sulfur dioxide or any other inert or other reactive gas.

Preferably the air is allowed into the container through the one or more gas inlets, driven by a pressure differential between the air outside the container and any slight vacuum inside the container caused by the selective extraction or drawing of gas from inside the container by the membrane. Preferably the flow rate of the air introduction step would be about 90 litres/min at a pressure differential of about 200 Pa. Other flow rates are contemplated such as 10, 20, 30, 40, 50, 60, 70, 80, 90, 100, 110, 120, 130, 140, 150 or thereabouts. It is to be understood that variations on these values are contemplated as being effective, and this value is controlled between values such as a trickle and a value of full flow. Also, there may be embodiments when forced induction or slowed induction or forced choking may be suitable, rather than simply allowing the air to flow into the container through any pressure differential. The air introducing step may be also conducted intermittently at the various flow rates and pressures.

The step of monitoring the level of oxygen may be combined with comparing that level with a desired set point and then introducing the ambient air to the container in accordance with the selected control conditions. Preferably the measurement of oxygen or other gas is routinely conducted, at selected spaced-apart time intervals, and the amount of introduced air for that time interval is dependent on the difference between the measured oxygen or other gas level and the selected set point.

The gas-monitoring step may also include the monitoring of carbon dioxide (CO₂) gas within the container. The method may also include the step of comparing the measured amount of CO₂ gas in the container and then altering the amounts of selective extraction of CO₂ in response to the measurements.

The membrane element preferably has a selectivity which allows carbon dioxide gas to permeate through the membrane element at a higher rate than oxygen and nitrogen, preferably at a ratio, for CO₂:O₂ of between about 2.5 and about 15. Preferred selectivity ranges for CO₂/N₂ are between about 5 and about 50. In a particularly advantageous arrangement which has been shown to be very effective with embodiments of the present invention, the selectivity of a suitable membrane for carbon dioxide:oxygen (CO₂/O₂) is relatively modest or low at between about 4 and about 5 and the selectivity for a suitable membrane for carbon dioxide:nitrogen (CO₂/N₂) is similarly modest, at between about 7 and about 14. A preferred membrane is manufactured from Polydimethylsiloxane (PDMS).

Membranes contemplated include an overall permeability for CO₂ of about 3000 Barrer and comprise a thickness of about 35 µm. This is a very high permeability and other materials are contemplated to be useful, including cellulose acetate, which has an overall permeability for CO₂ of 6.3 Barrer. This is a large difference, but it can be mitigated by altering the thickness of the membrane and having a large membrane area.

Preferred membranes have been shown to be about 3100 Barrers of permeability for CO₂ and 35 µm in thickness. Therefore the permeability per unit thickness for a suitable membrane is about 88 Barrers/µm. One type of suitable membrane for use with preferred embodiments of the present invention is manufactured from Polydimethylsiloxane (PDMS), which has moderate selectivity to CO₂, at about between 4 and 5, and a CO₂/N₂ selectivity of between about 10 and 11. Other membranes, including non-silicon membranes, may also be used.

The method may be implemented without any other means of drawing, converting, absorbing, extracting or otherwise disposing of carbon dioxide gas.

Preferably the estimating ambient air leak flow step is conducted by a computer which is responsive to a computer program to calculate an inlet flow rate based on the pressure differential or rate of change of pressure differential inside the container and/or rate of change of pressure differential between the outside and the inside of the container.

The pressure on the outside of the container may be measured by any suitable means or it may be estimated as being at Standard Laboratory Conditions (SLC) and input to the computer program as a constant.

Preferably the monitoring of gas component levels also occurs at selected intervals so as to calculate a rate of gas component level change. That is, the rate of change of CO₂ and rate of change of O₂ can be calculated and input to the computer to estimate the amount and rate of change of gas component, being O₂ and CO₂ that is required to drive the system to a suitable level for reducing decay of the payload during a journey.

In preferred embodiments, the gas drawing step is substantially continuous for the whole journey between commencement (container closure) and arrival (container opening).

An advantage of the preferred embodiments of the present invention is that a membrane with a low selectivity and low cost can be utilised in a control system to provide a stable, controlled, suitable environment for extending the life of respiring goods in transit.

Although the preferred embodiment includes the gas drawing step being continuous, the gas drawing step may be conducted under selected control conditions. The selected control conditions for the drawing step may include changing a rate of drawing of gas from within the container over time. The selected control conditions may involve a drawing step when a pump is actuated to draw gas through the membrane element from within the container at a selected range of flowrates and a holding step where the flowrate through the membrane is minimised or stopped altogether. The drawing step and the holding step may be alternated so that there is generally intermittent drawing of gas.

The selected control conditions under which the drawing step is conducted may include a situation where the drawing step and the holding step are of approximately equal time durations. In one embodiment, this time duration may be approximately 15 minutes. Other suitable time durations are include approximately 1 minute, 2 mins, 5 mins, 10 mins, 20 mins, 30 mins, 45 mins, and 1 hour, 2 hours, as well as unequal on-off times, such as 10 mins on, 20 mins off, 20 mins on 10 mins off, and so on. Some kinds of fruit payloads may suit a drawing step of 15 minutes and a holding step of 300 minutes, whereas some others may require, for stability, a drawing step of 60 minutes and a holding step of 30 minutes. Other combinations are contemplated and vary according to the respiration rate of and temperature required for the extended life of the particular payload of produce.

The drawing step may be shorter than the holding step to facilitate an equilibrium of gas components and pressures within the container.

The drawing step may be up to about 20 times shorter in duration than the holding step.

It is contemplated that control conditions may include a rate of change of drawing of the gas, or rate of change of introduction of oxygen from a bottle or ambient air governed by a sinusoidal pattern, or a sawtooth pattern, or other suitable waveform. The gradient of the sawtooth may be steep between drawing and holding, and flatter between a subsequent holding and drawing, so that there is a longer gap for allowing restoration of equilibrium conditions, or the waveform may be more of a uniform. Furthermore, it is contemplated that the drawing step may be merely reduced in amplitude so that the drawing is brought to a trickle, rather than reducing drawing to a complete holding stop. This trickling may have other advantages, such as for example reducing unintentional reverse movements of other gases through the membrane.

The method may further include the step of conducting a gas tightness test of the container and including the level of leakage, if any, in a control algorithm.

Preferably the step of introduction of ambient air is conducted under selected control conditions. Preferably those conditions include changing a rate of introduction of ambient air from outside the container over time.

The selected control conditions may be a reduced or zero flow rate at selected times, caused by a throttling step. The throttling step may be caused by a diaphragm being placed across the feed and/or sweep side of the membrane unit, or by some other physical or mechanical interference to increase the pressure and reduce the flowrate through the membrane unit. The throttling may be by a venturi, orifice, partial blockage, choke, variable aperture, sphincter or some porous material such as a sintered block, sponge, or other suitable substance. The throttle may throttle by being extended into the feed or sweep streams by a transducer.

A form of the invention may include the feature of controlled modulation of flow of the gas drawing step by an intermittent operation of the membrane element. A reduced or zero CO₂ extraction flow allows time for the oxygen level within the container to build up, avoiding the risk that continuous drawing of CO₂ through the membrane (which will include significant levels of gases other than CO₂) will lead to instability, as the air inlet introduction operates in response to the monitoring of oxygen level.

The method may also include the step of refrigerating the container. The container may be refrigerated by known refrigeration devices at known refrigeration temperatures.

According to another aspect of the present invention there is provided a container suitable for storing or transporting respiring produce, the container including:
opposed end and side walls, and opposed floor and roof defining a void for storage of the produce;
at least one gas outlet and a selective membrane unit in fluid communication with the gas outlet so that in use gas within the container may be drawn therethrough from inside the container to outside the container;
a blower or fan or other gas extraction unit in fluid communication with the membrane unit for drawing gas through the membrane unit;
at least one gas inlet for introducing air from outside the container to the inside the container;
a first valve to control air flow through the gas inlet; and
a pressure measurer for measuring pressure inside the container at selected time intervals so as to calculate a rate of internal pressure change over time;
wherein the pressure measurer is operatively connected to the first valve, so as in use to operate the first valve to control air flow into the container from outside the container in response to an estimated air leak flow to adjust the composition of gases within the container.

The pressure measurer may include a pressure responsive member which is responsive to pressure changes within the container. The pressure responsive member may be a diaphragm.

The pressure measurer preferably includes an actuator for actuating the first valve. The actuator may be operatively connected to the diaphragm and the valve.

Preferably the pressure measurer includes a pressure sensor for taking continuous measurements or discrete measurements of pressure spaced apart over time.

Preferably a controller is provided and in use operatively connected to the pressure sensor and responsive to input from the pressure sensor to estimate leak inlet flow based on the pressure measurements taken by the pressure sensor. Preferably the controller adjusts the composition of gases within the container by operating the first valve in response to the estimate of leak inlet flow.

Preferably there is provided a sensor for sensing levels of one or more gases within the container. Preferably the sensor is an oxygen sensor. Another sensor provided may be a carbon dioxide sensor.

Optionally the container includes a power supply to power the sensor, controller and controlling means. Preferably the container further includes a refrigeration unit to which the power supply is also connected. Preferably the sensor and control system are powered by a standalone battery so that the control system can be provided to a standard container.

Preferably the one or more controllers include a processor, a memory, an input/output device, such that the or each controller is responsive to a program to control the operation in response to various inputs.

Preferably the or each controller also includes a timer for measuring time elapsed in storage for the respiring produce so as to operate a control algorithm which operates the inlet valves and/or extraction pump based on time elapsed. Preferably the or each controller is adapted to receive inputs from such devices as the timer, thermocouples, gas monitors, inputs from operators via the input/output device, including mass and type of produce. The memory and processor may be loaded with tables for calculating run times for various payloads and produce types.

For one preferred payload of produce, the setpoint for the CO₂ may be about 5%.

Produce transport containers typically are not wholly sealed from the outside environment. That is, there will be some leakage into the container or from the container, depending on the pressure differential between inside and outside the container. It is these leakages that the preferred embodiments of the invention seek to exploit. The pressure monitoring inside the container over selected time intervals indicate to the controller via the program, the level of the leakage and thus the amount of adjustment the inlet controller must make to control the composition of gases in the container. So, after preparing or building the container, analysis of gas-tightness may be used to calibrate the system, to ensure the level of leakage will not unduly affect operation of the container. Preferably the base leakage of the container is less than the respiration rate of the produce in the container.

It is noted that the production of CO₂ by respiring produce is, in one situation of rapidly respiring produce, about 30 mL/kg/hour, and produce in a container is up to 18 tonnes. So for a container packed with rapidly respiring produce, there will be less leakage than the CO₂ gas production by the produce, ie. less than about 540 L/hr. A more typical respiration rate is 5 - 10 mL/kg/hr. When the respiration rate is 5 mL/kg/hr, then the CO₂ gas production for a full container is 90 L/hr. If the respiration rate is 10 mL/kg/hr, then the CO₂ production is 180L/hr.

The method and container of preferred embodiments of the present invention are advantageous because CO₂ monitoring equipment is not necessarily required, although it can be used if deemed necessary. This is an advantage because CO₂ monitoring equipment is costly, both in terms of capital cost and in terms of operation and maintenance.

As described herein, the method and apparatus of the present invention can utilise, among other steps, the step of monitoring of pressure inside the container over time, as well as levels and rates of change of oxygen and controlled input of air to the container from outside, which affects the control and levels of carbon dioxide inside the container.

Further disclosed is a computer that is arranged for operation in accordance with a method of controlling gas composition within a container suitable for storing respiring produce, the container including at least one gas outlet and at least one gas inlet, the method including the steps of:
drawing a selected gas from within the container through a selective membrane element through the at least one gas outlet; and
measuring ambient pressure inside the container and introducing air from outside the container into the container through the at least one gas inlet in response to the measured level of pressure in the container to control the relative composition of gases inside the container.

There is provided a computer program for instructing a computer and arranged so that, when loaded in the computer, the computer operates as a controller for controlling gas composition within a container in accordance with methods hereindescribed.

There is provided a computer readable program code embodied therein for causing a computer medium to operate as a controller for controlling gas composition within a container in accordance with methods hereindescribed.

There is provided a data signal having a computer readable program code embodied therein for causing a computer to operate as a controller for controlling gas composition within a container in accordance with methods hereindescribed.

The container according to the present invention is suitable for transporting respiring produce that is perishable. Such goods include fruit, vegetables, plants, seedlings, plant materials, and the like.

There is provided a control system for controlling the environment within a container housing respiring produce, the container having opposed end and side walls, and opposed floor and roof defining a void for storage of the produce, at least one gas outlet and a selective membrane unit in fluid communication with the gas outlet so that in use gas within the container may be drawn therethrough from inside the container to outside the container, a blower or fan or other gas extraction unit in fluid communication with the membrane unit for drawing gas through the membrane unit, at least one gas inlet for introducing air from outside the container to the inside the container, a first valve to control airflow through the gas inlet, the control system including:
a pressure detector for detecting pressure inside the container;
wherein the pressure detector is operatively connected to the first valve, so as in use to operate the first valve to control air flow into the container from outside the container to adjust the composition of gases within the container.

### Brief Description of the drawings

To enable a clearer understanding, the invention will now be further explained and illustrated by reference to the accompanying drawings in which:
Figure 1 is a schematic drawing of a container according to one embodiment of the present invention;
Figure 2 is a schematic view of a processing system which is part of a controller for use with a preferred embodiment of the present invention;
Figure 3 is a schematic view of a portion of the architecture of the processing system of Figure 2;
Figure 4 is a schematic view of a distributed architecture which may be used as a controller;
Figure 5 is an end elevation view of a membrane unit used in the schematic arrangement of Figure 1;
Figure 6 is a side elevation view of the membrane unit of Figure 5;
Figure 7 is a cutaway isometric view of the membrane unit of Figure 5;
Figure 8 is a schematic drawing of a container according to another embodiment of the present invention;
Figure 9 is a graph of gas mole fraction results which were produced in computer modelling of the system of Figure 1 under initial conditions of a 40-ft container having a payload of 18 tonnes of produce respiring at 10 ml CO₂ /h/kg at 10 degrees celsius and an equivalent leak diameter of 8 cm circular hole, 100% duty cycle of CO₂ extraction;
Figure 10 is a graph of overall container pressure results which were produced by computer modelling of the system of Figure 1 under the same conditions;
Figure 11 is a graph of modelling gas mole fraction results for the same produce as that for Figure 9, but with a smaller leak equivalent value - 6 cm diameter;
Figure 12 is a graph of container pressure results for the same produce as that for Figure 11;
Figure 13 is a graph of gas mole fraction modelling results for the same produce as that for Figure 9, but with a smaller leak equivalent value - 2 cm diameter;
Figure 14 is a graph of container pressure results for the same produce as that for Figure 13;
Figure 15 is a graph of mole fraction modelling results for the same produce as that for Figure 9, but with a smaller leak equivalent value - 0.5 cm diameter;
Figure 16 is a graph of container pressure results for the same produce as that for Figure 15;
Figure 17 is a graph of modelling results for the same produce as that for Figure 9, but with a smaller respiration rate of 5 ml CO₂ /h/kg and a smaller leak equivalent value - 2 cm diameter and a different duty cycle of CO₂ extraction - being on for 75% of the time;
Figure 18 is a graph of container pressure results for the same produce as that for Figure 17;
Figure 19 is a graph of modelling results for the same produce as that for Figure 17, but with a smaller leak equivalent value - 2 cm diameter and a full 100% extraction rate of CO₂; and
Figure 20 is a graph of container pressure results for the same produce as that for Figure 19.

### Detailed Description of Preferred Embodiments

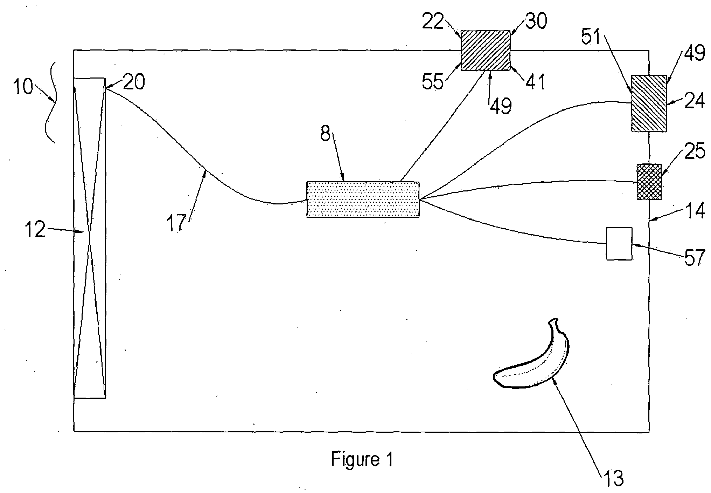

Referring to Figure 1 there is shown a refrigerated container 10 which includes a refrigeration unit 12 and doors 14. The container 10 in use contains respiring produce 13, and further includes gas outlets 20 and 22 and gas inlets 24 and 25.

The container 10 also includes a membrane unit 30 which is in fluid communication with the gas outlet 22. A pump or blower or fan or other extractor means 41 is associated with the membrane unit 30 which is configured to draw gas from the container 10 through a membrane (not shown) in the membrane unit 30, the membrane being of a predetermined selectivity so that some gases from the container are drawn or extracted through (ie. permeate through or drawn by forced permeation) the membrane at a greater rate than other gases. The gas drawn through the membrane in the preferred embodiment shown is CO₂.

The selectivity of the membrane of the embodiment shown is relatively modest or low, at about 4:1 or about 5:1 for CO₂:O₂ and about 10:1 or about 11:1 for CO₂:N₂. Other CO₂ selectivities for the membrane may be used, including between about 2.5:1 and about 15:1.

A useful membrane used in tests has been shown to have an absolute permeability for CO₂ of about 3100 Barrer and comprises a thickness of about 35 µm. Therefore the permeability per unit thickness for a suitable membrane is about 88 Barrer per µm. One material useful for the purposes of the test set out herein is Polydimethylsiloxane (PDMS). One of the reasons for this is that it is cost-effective and widely available in a format and size which is useful for extracting gases from shipping containers.

A controller 8 is shown in the Figure which is used in the container 10 to control the gas composition within the container 10. The controller 8 includes a CPU, a memory and input/output devices connected to one another by a bus. The input/output devices are in the form of docks, connectors or the like to receive inputs from various peripheral devices.

The peripheral devices are connected to the docks or connectors of the controller 8 so that they can send information to and/or be instructed by the controller 8 and include actuators in the form of relays or other actuators for actuating the pump, blower, fan or other extraction unit 41 on the membrane unit 30, actuators or relays for actuation of valves disposed at outlets 20, 22 and at inlets 24 and 25, sensors 49 in the form of oxygen concentration measurement device 51, carbon dioxide measurement device 55 and ambient internal pressure measurement device 57. The controller 8 is also configured to receive inputs relating to temperature in the container 10, nitrogen gas sensors (not shown), and the like.

In use, the controller commences extracting or drawing CO₂ gas from inside the container. This can take some time, such as up to 4 days before the Oxygen level inside the container comes down from 21% to a set point of 5%. During that time, the valves 24 on the oxygen control module on the controller 8 remain closed so pressure inside the container becomes very low, causing difficulties for stability of control.

To alleviate this problem and/or to provide an alternative and/or a new controller, the controller 8 in use periodically receives an input from the pressure measurement device 57 regarding the pressure inside the container. The controller takes that measurement and estimates, sometimes in conjunction with another pressure measurement taken a selected time later, using an algorithm, a leak flow into the container in terms of a variable which we can consider to be an equivalent leak hole diameter size. This equivalent leak hole size variable is then compared with an ideal leak hole size for that type of container, taking into account the oxygen level inside the container, the amount and type of produce having regard to the respiration rate of the produce, the drawing rate of CO₂, and the temperature of the produce.

If the equivalent leak hole diameter calculated is not as large as the ideal leak hole diameter, and oxygen is required due to there being a leak hole diameter deficit, then controller 8 will actuate the valve or stepper motor to increase the size of inlet 25 or force air through inlet 25 so that the overall leak hole size for those particular conditions are met. That is, the controller 8 will physically instruct the opening of a valve in fluid communication with the inlet 25 and adjust its size such as with an iris or similar variable orifice, operated by a stepper motor, or force air through a non-variable orifice disposed at the inlet 25 so as to increase the air introduced through the inlet 25.

The sensor 51 of controller 8 makes measurements of oxygen concentration at selected time intervals. If the oxygen concentration or rate of oxygen concentration varies from a selected value (a 'setpoint', which may be preset in accordance with the rate of respiration of produce 13 in the container), controller 8 sends a signal via wires 17 or other communication means to open valves 20 and 24. This introduces air from outside the container 10 through inlet 24 and draws air from container 10 through outlet 20. Outlet 20 may include a fan to force air from the container. A fan may also be provided on inlet 24 to draw air into the container 10.

In one embodiment, the portion of the controller 8 which is responsible for oxygen concentration operates on an 8-minute cycle. That is, every 8 minutes the sensor checks the oxygen concentration level, and compares it with the set point. If the level is within an acceptable range of deviation from the same as the set point, the valves 20 and 24 are not opened. If there is a large difference between the desired set point and the measured level, the valves are opened for most of the 8-minute interval. If there is a small difference, the valves are opened for a small portion of the 8-minute interval.

Other embodiments of controller are contemplated. One alternative embodiment of controller now operates on a 10-minute cycle.

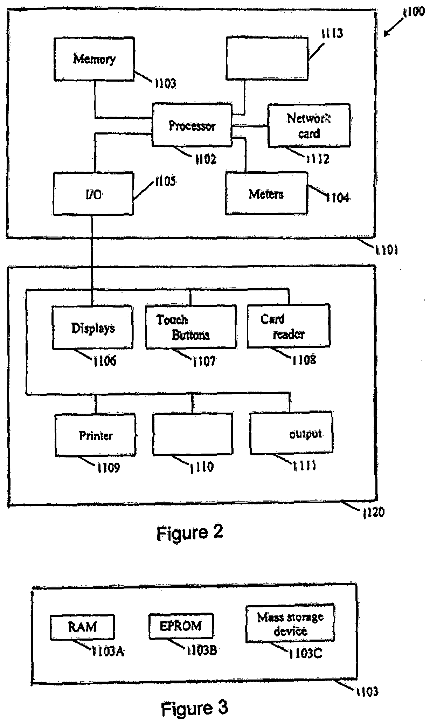

Figure 2 shows a block diagram of representative architecture of a controller 1100 which may be the same as the controller 8 shown in Figure 1. The method of preferred embodiments of the present invention may be executed by such a machine, smartphone or other standalone computer, generally as hereinafter described.

The controller 1100 includes a control device 1101 having a processor 1102. Instructions and data to control operation of the processor 1102 in accordance with preferred embodiments of the present invention are stored in a memory 1103 which is in data communication with the processor 1102. The memory 1103 and processor 1102 are connected together by a bus.

Typically, the controller 1100 will include both volatile and non-volatile memory and more than one of each type of memory, with such memories being collectively represented by the memory 1103 and connected by a bus.

Figure 3 shows a block diagram of the main components of an exemplary memory 1103. The memory 1103 includes RAM 1103A, EPROM 1103B and a mass storage device 1103C. The RAM 1103A typically temporarily holds program files for execution by the processor 1102 and related data. The EPROM 1103B may be a boot ROM device and/or may contain some system or control-related code. The mass storage device 1103C is typically used to store control programs, the integrity of which may be verified and/or authenticated by the processor 1102 using protected code from the EPROM 1103B or elsewhere.

The controller 1100 has an input/output (I/O) interface 1105 for communicating with an operator interface 1120 of the controller 1100, the operator interface 1120 having several peripheral devices. The input/output interface 1105 and/or the peripheral devices may be intelligent devices with their own memory for storing associated instructions and data for use with the input/output interface or the peripheral devices.

The controller 1100 also includes temperature, pressure, oxygen and carbon dioxide sensors represented by 1113 and 1103 which are connected either wirelessly or by wire to processor 1102.

In the example shown in Figure 2, the peripheral devices that may communicate with the control device 1101 comprise one or more displays 1106and a touch screen 1107. A card reader 1108 and a printer 1109 may be provided in some optional embodiments but are not necessarily provided in the preferred embodiment. Additional hardware may be included as part of the controller 1100, or hardware may be omitted as required for the specific implementation.

In addition, in alternative embodiments, but not necessarily in the preferred embodiment, the controller 1100 may include a communications interface, for example a network card 1112. The network card 1112 may, for example, send status information or other information to a central controller, server or database and receive data or commands from the central controller, server or database.

It is also possible for the operative components of the controller 1100 to be distributed, for example input/output devices 1106, 1107, 1108, 1109, 1110, 1111 may be provided remotely from the environment controller 1101.

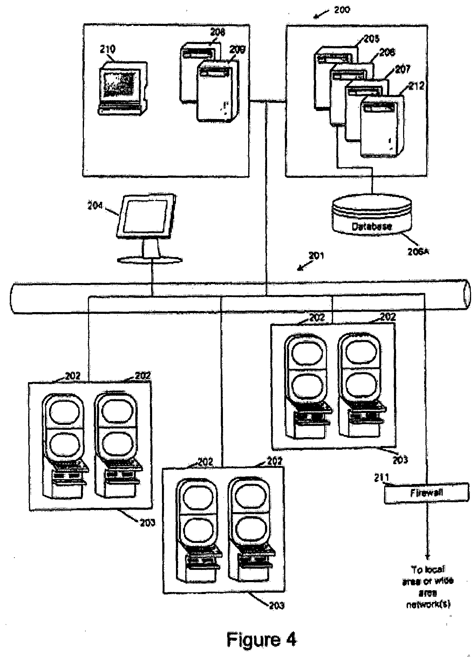

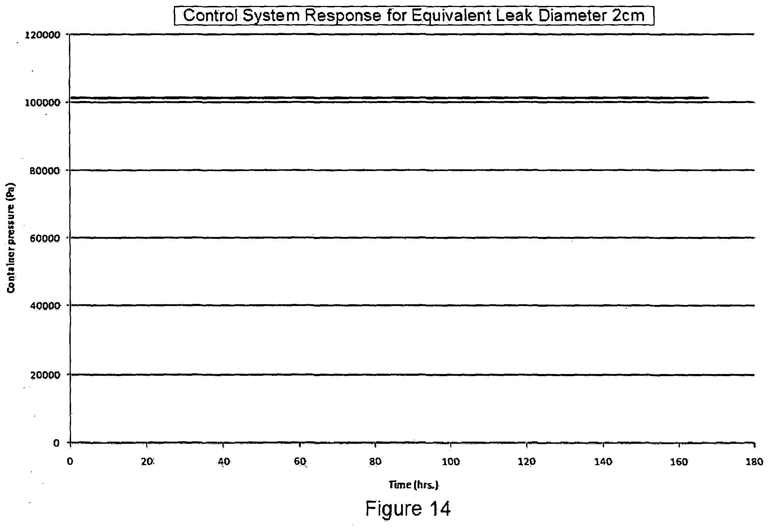

Figure 4 shows a control and data post processing system 200 in accordance with an alternative embodiment. In preferred embodiments the controllers are standalone units and are not networked but it is contemplated that they could be networked if necessary. The system 200 includes a network 201, which for example may be an Ethernet network, a LAN or a WAN. In this example, three banks 203 of two control machines 202 are connected to the network 201. The control machines 202 provide a control interface and may be the same as the controller 8 shown in Figure 1, or may have simplified functionality depending on the requirements for implementing control, such as controlling a bank of containers at once. While banks 203 of two control machines 202 are illustrated in Figure 14, banks of one, three or more control machines 202 are also envisaged.

One or more displays 204 may also be connected to the network 201. The displays 204 may, for example, be associated with one or more banks 203 of control machines 202. The displays 204 may be used to display representations associated with control situations on the control machines 202, and/or used to display other representations.

In a thick client embodiment, a control server 205 implements part of the control system using a control machine 202 and the control machine 202 implements part of the control algorithm. With this embodiment, as both the control server 205 and the control machine 202 implement part of the control, they collectively provide a controlled environment controller. A database management server 206 may manage storage of algorithms and associated data for downloading or uploading or access by the control machines 202 in a database 206A.

In a preferred embodiment, the control machines 202 upload their data so as to be processed and reviewed. In a variation of the above thick client embodiment, the control machine 202 may implement the control, with the control server 205 functioning merely to serve data indicative of a control algorithm or method to a control machine 202 for implementation.

With this implementation, a data signal containing a computer program usable by the client terminal to implement the control method may be transferred from the control server to the client terminal, for example in response to a request by the client terminal.

In a thin client embodiment, the control server 205 implements most or all of the method by an operator using a control machine 202 and the control machine 202 essentially provides only the operator interface. With this embodiment, the control server 205 provides the method controller. The control machine will receive instructions, and pass the instructions to the control server which will process them and return settings and other outcomes to the control machine and display them. In a thin client embodiment, the control machines could be computer terminals, e.g. PCs running software that provides a user interface operable using standard computer input and output components.

The control system 200 may communicate with other control systems, other local networks such as a corporate network, and/or a wide area network such as the Internet, for example through a firewall 211.

It is contemplated that the system of one embodiment of the present invention might also operate in an alternative embodiment without the sensor means for measuring oxygen. In place of the oxygen sensor, selected calculations are made, and selected inputs provided to the controller so that the controller can function to maintain selected gas concentrations, in particular, CO₂ and O₂ at selected levels. These calculations and inputs include at least respiration rate of produce, volume/mass of produce, temperature inside container, gas leakage rate of container 10 (through doors, seals etc) and gas transfer rates through valves 20, 22, 24, 25 and membrane unit 30. Once these inputs have been provided, the controller can calculate the control regime required such as for example the rate of inlet of air through the valve 24 and 25 by forced induction by fans or by varying the size of the aperture in inlet 24 and/or 25.

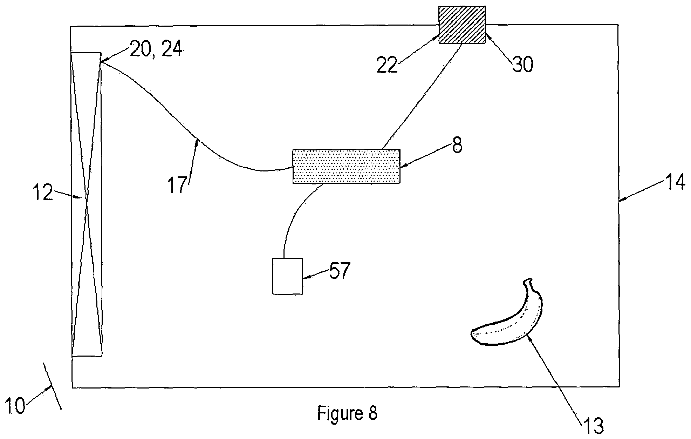

As shown in Figure 8, an embodiment contemplated does not include a pressure sensor but instead includes a pressure detector 157 with a pressure responsive element such as for example a mechanical device such as a diaphragm, together with an actuator operatively connected thereto. The pressure responsive element is adapted to move in a selected direction in response to pressure changes within the container. The actuator may be actuated by movement of the pressure responsive element and may then move to actuate the first valve 124 to allow air through the inlet to adjust the composition of gases within the container. In use the diaphragm moves when the pressure inside the container approaches or reaches a selected pressure, pre-determined so that the control of the gases is stabilised.

Figure 8 shows a schematic layout of the alternative arrangement of the present invention described above where there is no pressure sensor or gas component (CO₂ or O₂) sensor, but the pressure detector can work with a gas component sensor and controller 55. In the embodiment without the gas component sensor, the controller 108 includes a timer to operate the valves.

One function of the controller 8 may be, in an alternative embodiment, to actuate the pump on the membrane unit 30 in accordance with a selected control regime. An effective control regime is to vary the drawing of gas from within the container over time. This control regime, which modelling has estimated can be used in maintaining an O₂ setpoint of about 5% and a CO₂ setpoint of about 7% in a 40-ft container, is to draw the gas out of container 10 in an intermittent manner. This means that control varies from a maximum drawing rate for a first prescribed time period, to a zero drawing rate for a second prescribed time period.

As will be understood by persons skilled in the art, the pressure drop across the membrane affects the extraction rate of CO₂ because the air flow changes when the pressure drop changes. It will be appreciated that the drawing rate can vary between the maximum level and a trickle during the holding step. The rate of drawing of actual CO₂ is far less than the overall flow rate because CO₂ is only a small component of air, and when the CO₂ is in the container of respiring produce, it is desired to be only at about 7%.

Again, it will be appreciated in this alternative embodiment that control may vary between said maximum drawing rate for a first prescribed time period and a lower drawing rate for a second prescribed time period. It will also be appreciated that control regimes other than a step function may be used, such as sinusoidal, sawtooth or other waveform between drawing rates. The common feature of the alternative embodiment is the intermittency of operation of membrane unit 30, so allowing successive periods of time for an equilibrium to be re-established.

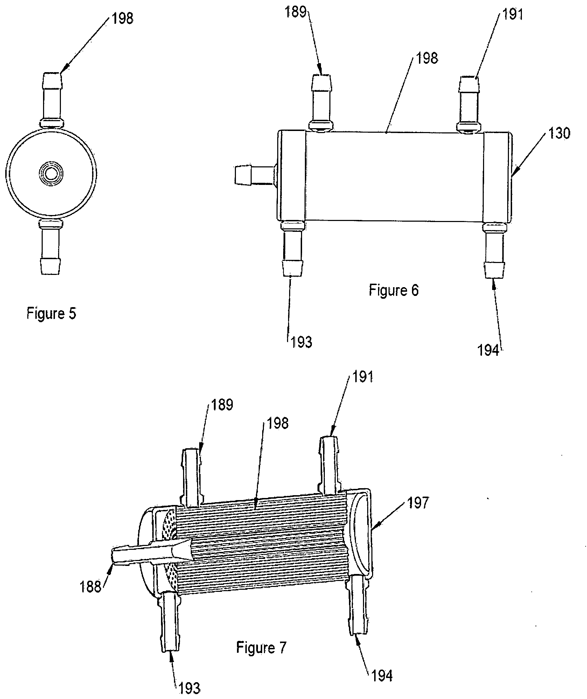

For clarity, a membrane unit 130, equivalent to the schematic membrane unit 30 shown in Figure 1 is shown in Figures 5-7, in which a generally cylindrical module housing 198 houses a plurality of hollow membrane (PDMS) fibres 197. The housing 198 includes side or feed ports 196 which are in fluid communication with an inside of the hollow PDMS membrane fibres. Side port 194 functions as an inlet port and side port 193 functions as an outlet or retentate port.

The housing 198 further includes shell side ports or outlet ports 191, 189 and 188 which are in fluid communication with the outside of the hollow PDMS membrane fibres 197. That is, these ports include permeate which is extracted from the container and is directed to ambient air outside the container 10.

### EXAMPLE

A mathematical model of a standard 40-foot container was created using a computer program. Various initial conditions were modelled, including a container volume of 67.4 cubic metres; mass of respiring goods 18000 kg, leakage rates on different tests of 8, 6, 2, 0.5, 0.2 and 0.1, respiration rates in each test run of 10 and 5 ml CO₂/h/kg and a temperature of 10 degrees Celsius. Further, the membrane constants were input, being selectivity, permeability, and the like.

On one run of the model, the membrane permeability constant was 3250 Barrer for CO₂, thickness was 35 µm, membrane permeability constant for Nitrogen was 280 Barrer, membrane permeability constant for Oxygen was 600 Barrer, and for Water vapour it was 36000 Barrer.

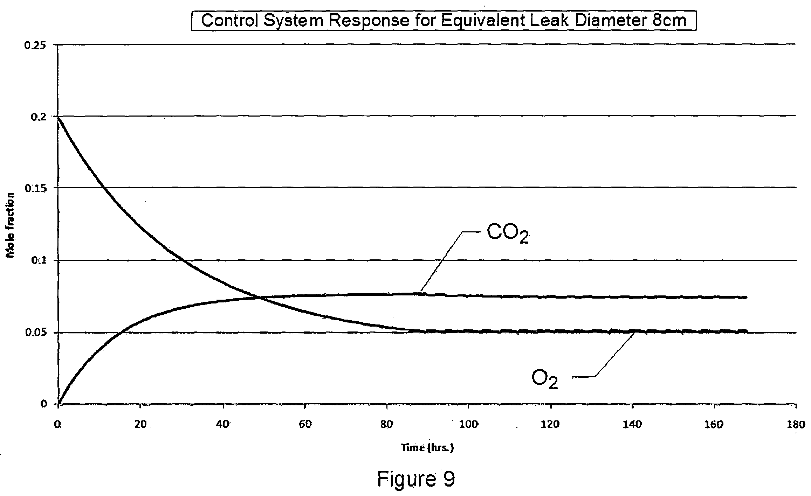

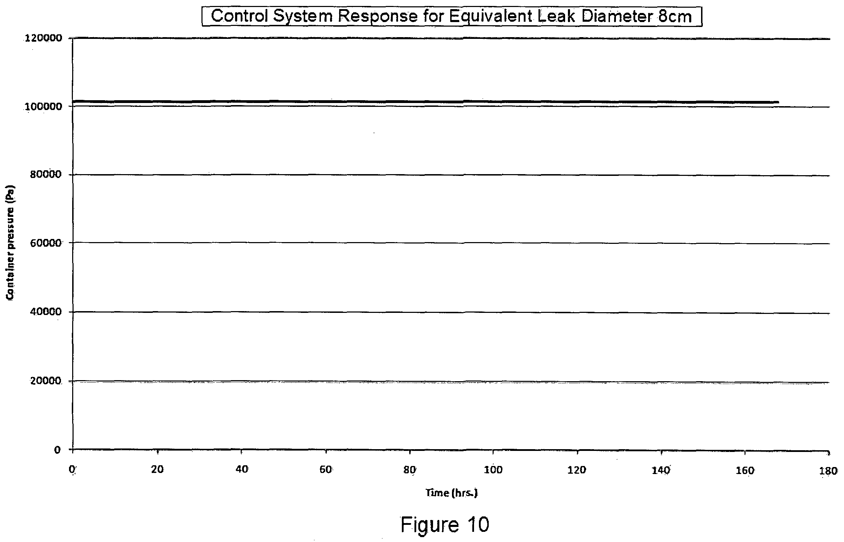

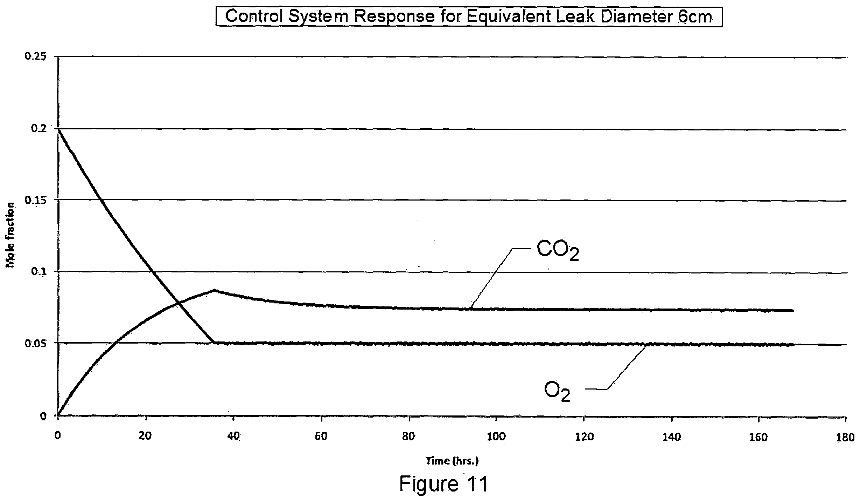

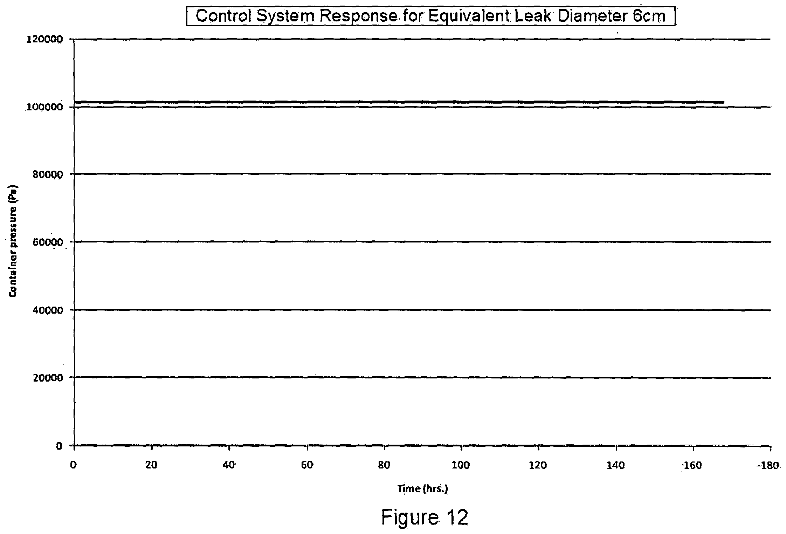

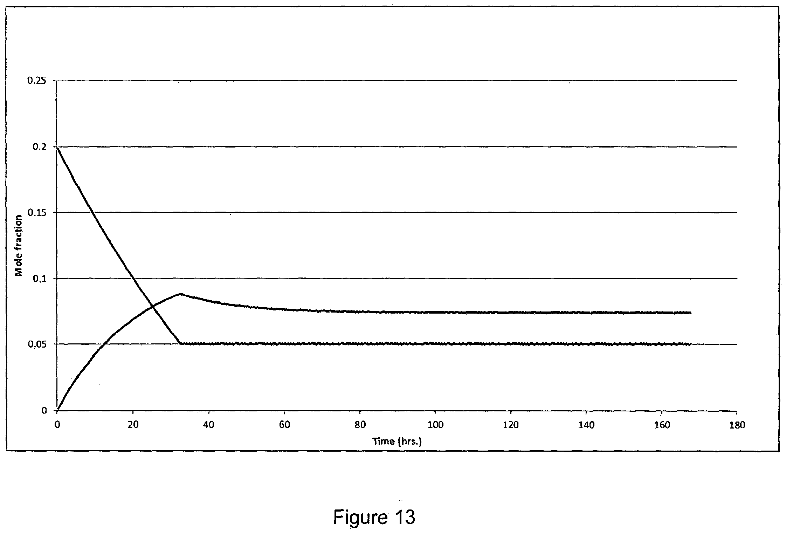

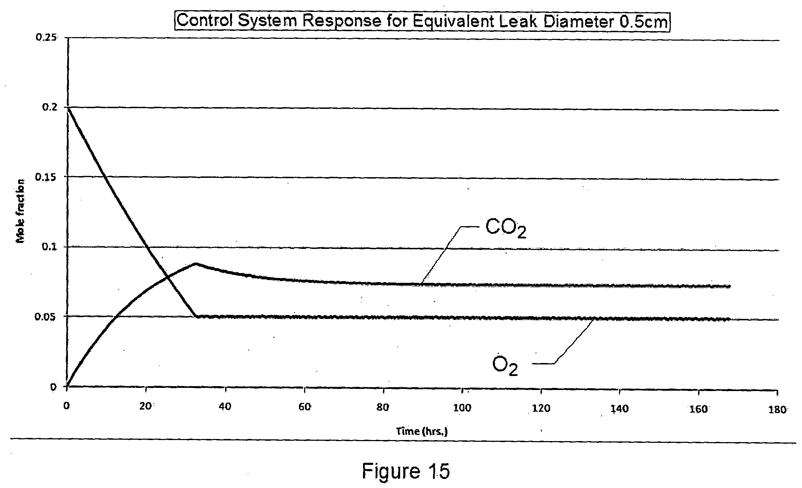

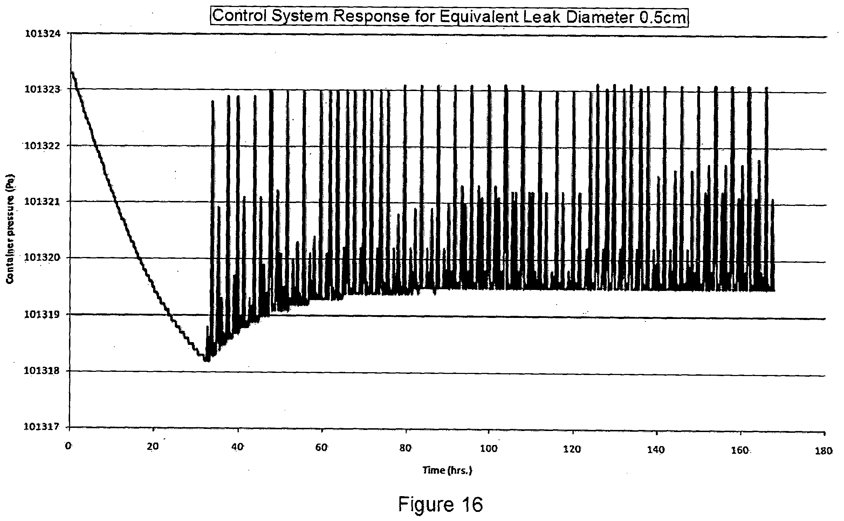

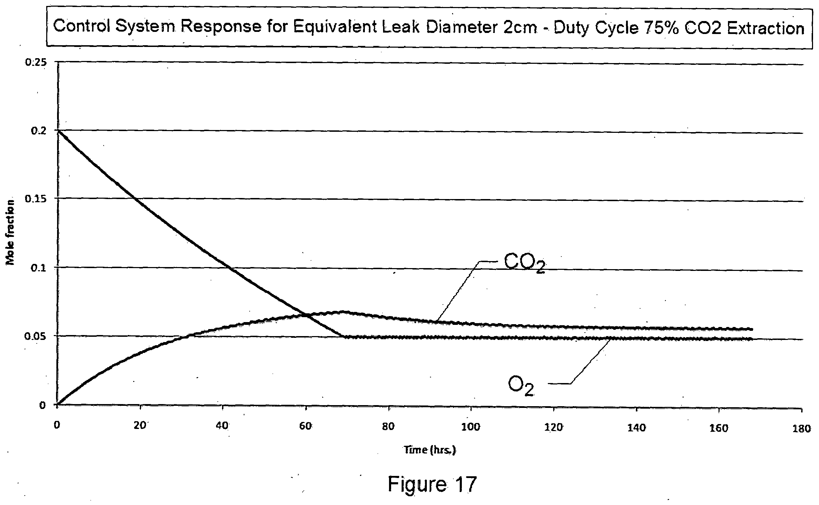

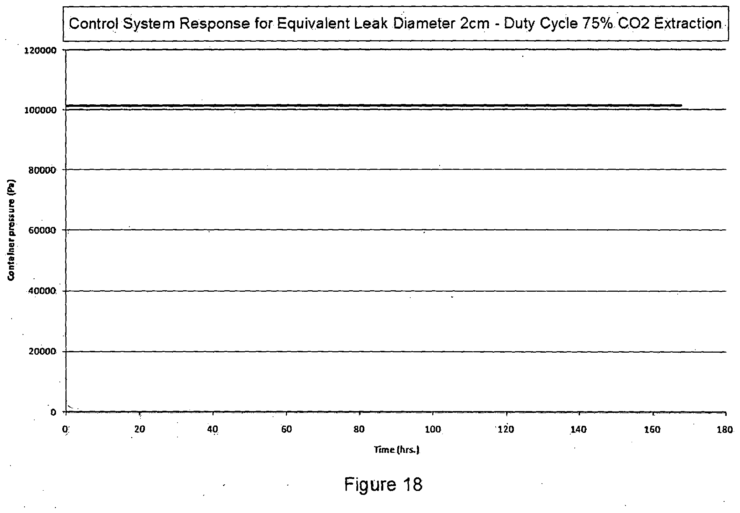

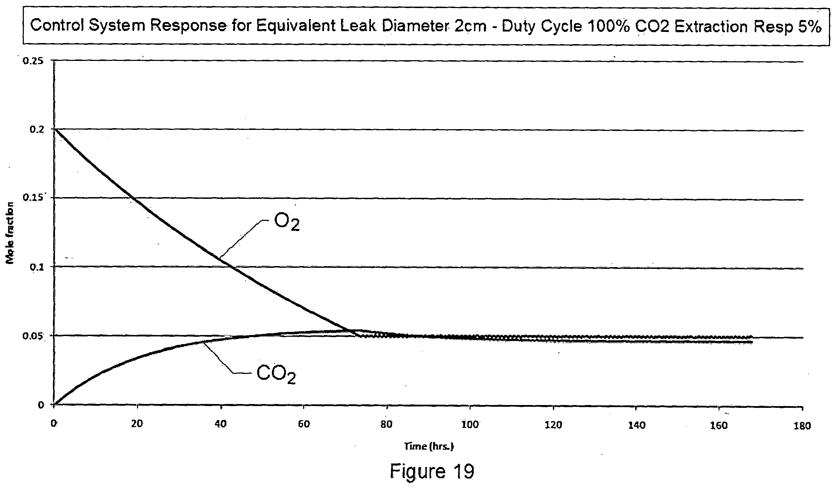

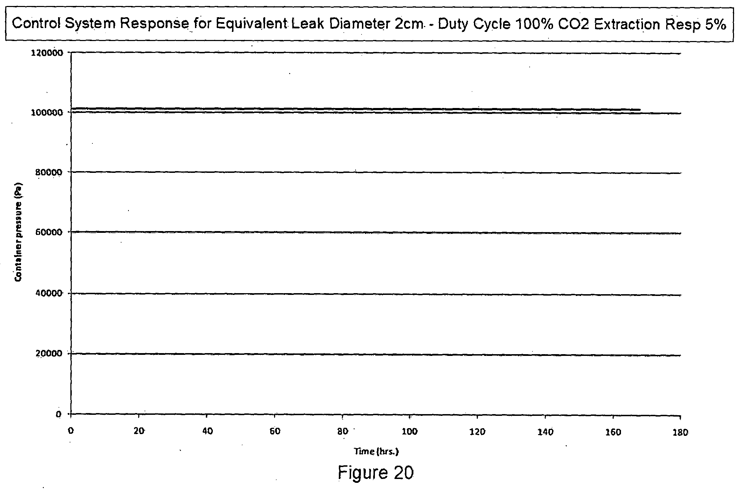

The results of the mathematical modelling showed that the system stabilised at about 5% for Oxygen and 7% for Carbon Dioxide. Figures 9 to 20 show the results. Generally speaking, an equivalent orifice of 2 cm was found to be ideal for quick pull down and good stable, low values for Oxygen and Carbon Dioxide.

It can be seen from the graphs that for a respiration rate of 10 ml CO₂/h/kg a stable rate can be achieved of 7% Carbon Dioxide and 5% Oxygen. When the respiration rate reduces to 5 ml CO₂/h/kg then the same control regime where a 2 cm hole equivalent is sought by the controller 8 would yield a stable rate of 5% Carbon Dioxide and 5% Oxygen.

This value of 2 cm diameter leak hole will be sought by the controller as an overall leak equivalent for the container, and in use, the increase in inlet diameter 25 will be opened to complement that overall value.

Modelling also showed that alteration of the pressure through the membrane unit, affecting the flowrate during the holding step, by a mechanical interference such as a blockage or other porous item, is useful for causing a holding step when required and controlling the flow through the membrane unit to facilitate equilibrium conditions.

Advantageously, the preferred embodiments of the method and apparatus of the present invention utilise a membrane of only moderate CO₂ selectivity, relative to N₂ and O₂ but it is a membrane which is widely available in the size and format required for the purpose of controlling container environment, at a reasonably low cost. The advantage of the preferred embodiments of the present invention are that a membrane unit with a low selectivity and low cost can be utilised in a control system utilising controlled introduction of air to provide a stable, controlled, suitable environment for reducing respiration of, and extending the life of, respiring goods in transit.

## Claims

1. A method of controlling gas composition within a container containing respiring produce, the container including at least one gas outlet and at least one gas inlet, the method including:
drawing a selected gas from within the container through a selective membrane element so that the selected gas is drawn from the container through the at least one gas outlet;
**characterised in that** the method further includes the steps of:
measuring pressure inside the container at selected time intervals so as to calculate a rate of internal pressure change over time;
estimating an air leak flow using the rate of internal pressure change over time; and
introducing air under selected control conditions from outside the container into the container through the at least one gas inlet in response to the estimated air leak flow to control the relative composition of gases inside the container.

2. The method in accordance with claim 1 wherein the pressure measuring step further includes a step of responding to a change in pressure with a pressure-responsive member to actuate a control element.

3. The method in accordance with claim 1 or 2 wherein the gas drawing step includes selectively drawing carbon dioxide through the membrane element such that carbon dioxide gas is extracted from the container at a higher rate than other gases present within the container.

4. The method in accordance with any one of claims 1 to 3 wherein the method further includes the step of monitoring levels of one or more gas components inside the container to provide one or more gas component level readings.

5. The method in accordance with claim 4 wherein the air introducing step is taken in response to the one or more gas component level readings.

6. The method in accordance with any one of claims 1 to 5 wherein the air is introduced into the container through the one or more gas inlets, driven by a pressure differential between the air outside the container and any slight vacuum inside the container caused by the selective extraction or drawing of gas from inside the container by the membrane.

7. The method in accordance with any one of claims 1 to 6 wherein the air introducing step is conducted intermittently.

8. The method in accordance with claim 4 wherein a step of monitoring the level of oxygen is combined with comparing that level with a desired set point and then introducing the air to the container in accordance with the selected control conditions.

9. The method in accordance with claim 6 wherein the membrane element has a selectivity which allows carbon dioxide gas to permeate through the membrane element at a higher rate than oxygen at a CO₂:O₂ ratio of between about 2.5 and about 15 and the membrane element has a selectivity which allows carbon dioxide gas to permeate through the membrane element at a higher rate than nitrogen at a CO₂:N₂ ratio of between about 5 and about 50.

10. The method in accordance with any one of claims 1 to 9 wherein the selectivity membrane is manufactured from Polydimethylsiloxane (PDMS) or cellulose acetate.

11. The method in accordance with any one of claims 1 to 10 wherein the method is implemented without any other means of drawing, converting, absorbing, extracting or otherwise disposing of carbon dioxide gas.

12. The method in accordance with any one of claims 1 to 11, wherein the estimating air leak flow step is conducted by a computer which is responsive to a computer program to calculate an inlet flow rate based on the pressure differential or rate of change of pressure differential inside the container and/or rate of change of pressure differential between the outside and the inside of the container.

13. A container for storing or transporting respiring produce, the container including:
opposed end and side walls, and opposed floor and roof defining a void for storage of the produce;
at least one gas outlet and a selective membrane unit in fluid communication with the gas outlet so that in use gas within the container may be drawn therethrough from inside the container to outside the container;
a blower or fan or other gas extraction unit in fluid communication with the membrane unit for drawing gas through the membrane unit;
at least one gas inlet for introducing air from outside the container to the inside the container;
a first valve to control air flow through the gas inlet; and
a pressure measurer for measuring pressure inside the container at selected time intervals so as to calculate a rate of internal pressure change over time;
wherein the pressure measurer is operatively connected to the first valve, so as in use to operate the first valve to control air flow into the container from outside the container in response to an estimated air leak flow to adjust the composition of gases within the container.

## Patentansprüche

1. Verfahren zum Steuern einer Gaszusammensetzung in einem Behälter, welcher ein atmendes Produkt enthält, wobei der Behälter zumindest einen Gasausgang und zumindest einen Gaseingang umfasst, wobei das Verfahren umfasst:
Absaugen eines ausgewählten Gases aus dem Inneren des Behälters durch ein selektives Membranelement, sodass das ausgewählte Gas aus dem Behälter durch den zumindest einen Gasausgang abgesaugt wird;
**dadurch gekennzeichnet, dass** das Verfahren ferner die folgenden Schritte umfasst:
Messen des Druckes innerhalb des Behälters in ausgewählten Zeitintervallen, um eine zeitabhängige Innendruckveränderungsrate zu berechnen;
Schätzen eines Luftaustrittdurchflusses durch Verwenden der zeitabhängigen Innendruckveränderungsrate; und
Einführen von Luft unter ausgewählten Steuerbedingungen ausvon der Außenseite des Behälters in den Behälter durch den zumindest einen Gaseingang als Reaktion auf den geschätzten Luftaustrittdurchfluss, um die relative Zusammensetzung des Gases innerhalb des Behälters zu steuern.

2. Verfahren nach Anspruch 1, wobei der Schritt des Druckmessens ferner einen Schritt umfasst, in dem auf eine Druckänderung mit einem druckempfindlichen Element reagiert wird, um ein Steuerelement zu betätigen.

3. Verfahren nach Anspruch 1 oder 2, wobei der Schritt des Gasabsaugens das selektive Absaugen von Kohlendioxid durch das Membranelement umfasst, sodass das Kohlendioxidgas aus dem Behälter mit einem höheren Durchfluss als andere Gase abgesaugt wird, welche im Behälter vorhanden sind.

4. Verfahren nach einem der Ansprüche 1 bis 3, wobei das Verfahren ferner den Schritt des Überwachens der Pegel eines oder mehrerer Gaskomponenten innerhalb des Behälters umfasst, um eine oder mehrere Gaskomponentenpegelablesungen bereitzustellen.

5. Verfahren nach Anspruch 4, wobei der Schritt des Lufteinführens als Reaktion auf die eine oder die mehreren Gaskomponentenpegelablesungen ausgeführt wird.

6. Verfahren nach einem der Ansprüche 1 bis 5, wobei die Luft in den Behälter durch den einen oder die mehreren Gaseingänge eingeführt wird, indem sie durch ein Druckdifferential zwischen der Luft außerhalb des Behälters und irgendeinem leichten Vakuum innerhalb des Behälters angetrieben wird, welches durch das selektive Entnehmen oder Absaugen von Gas von Inneren des Behälters durch die Membran verursacht wird.

7. Verfahren nach einem der Ansprüche 1 bis 6, wobei der Schritt des Lufteinführens intermittierend ausgeführt wird.

8. Verfahren nach Anspruch 4, wobei ein Schritt des Überwachens des Sauerstoffpegels mit dem Vergleichen des Pegels mit einem gewünschten Sollwert und mit dem darauffolgenden Einführen von Luft in den Behälter in Abhängigkeit der ausgewählten Steuerbedingungen kombiniert wird.

9. Verfahren nach Anspruch 6, wobei das Membranelement eine Selektivität aufweist, welche ein Durchdringen des Kohlendioxidgases durch das Membranelement mit einem höheren Durchfluss als Sauerstoff bei einem CO₂:O₂ Verhältnis zwischen etwa 2,5 und etwa 15 ermöglicht, und wobei das Membranelement eine Selektivität aufweist, welche ein Durchdringen des Kohlendioxidgases durch das Membranelement mit einem höheren Durchfluss als Stickstoff bei einem CO₂:N₂ Verhältnis zwischen etwa 5 und etwa 50 ermöglicht.

10. Verfahren nach einem der Ansprüche 1 bis 9, wobei die selektive Membran aus Polydimethylsiloxan (PDMS) oder Zelluloseazetat hergestellt ist.

11. Verfahren nach einem der Ansprüche 1 bis 10, wobei das Verfahren ohne irgendein Mittel zum Absaugen, Umwandeln, Absorbieren, Entnehmen oder zum anderweitigen Entsorgen von Kohlendioxidgas umgesetzt wird.

12. Verfahren nach einem der Ansprüche 1 bis 11, wobei der Schritt des Schätzens des Luftaustrittdurchflusses mittels eines Computers ausgeführt wird, welcher auf ein Computerprogramm reagiert, um einen Eingangsdurchfluss auf der Basis des Druckdifferentials oder einer Druckdifferentialänderungsrate innerhalb des Behälters und/oder einer Druckdifferentialänderungsrate zwischen der Außenseite und der Innenseite des Behälters zu berechnen.

13. Behälter zum Aufbewahren oder Transportieren eines atmenden Produkts, wobei der Behälter umfasst:
gegenüberliegende End- und Seitenwände, und gegenüberliegende Boden- und Deckenteile, welche einen Hohlraum zum Aufbewahren eines Produkts definieren;
zumindest einen Gasausgang und eine selektive Membraneinheit, welche fluidisch mit dem Gasausgang verbunden ist, sodass, im Betrieb, Gas in dem Behälter dadurch aus dem Inneren des Behälters zur Außenseite des Behälters hin absaugbar ist;
ein Gebläse oder Lüfter oder eine andere Gasentnahmeeinheit, welche fluidisch mit der Membraneinheit zum Gasabsaugen durch die Membraneinheit verbunden ist;
zumindest einen Gaseingang zum Einführen von Luft von der Außenseite des Behälters ins Innere des Behälters;
ein erstes Ventil zum Steuern eines Luftdurchflusses durch den Gaseingang; und
einen Druckmesser zum Messen des Druckes innerhalb des Behälters in ausgewählten Zeitintervallen, um eine zeitabhängige Innendruckveränderungsrate zu berechnen;
wobei der Druckmesser betriebsmäßig mit dem ersten Ventil verbunden ist, sodass, im Betrieb, das erste Ventil betätigt wird, um den Luftdurchfluss in den Behälter aus der Außenseite des Behälters als Reaktion auf einen geschätzten Luftaustrittdurchfluss zu steuern, um die Zusammensetzung des Gases innerhalb des Behälters einzustellen.

## Revendications

1. Procédé de contrôle d'une composition de gaz à l'intérieur d'un récipient contenant un produit de respiration, le récipient comprenant au moins une sortie de gaz et au moins une entrée de gaz, le procédé comprenant :
le tirage d'un gaz sélectionné à partir de l'intérieur du récipient à travers un élément de membrane sélective de telle sorte que le gaz sélectionné soit tiré du récipient à travers l'au moins une sortie de gaz ;
**caractérisé en ce que** le procédé comprend en outre les étapes :
de mesure de la pression à l'intérieur du récipient à des intervalles choisis de manière à calculer un taux de changement de pression interne au fil du temps ;
d'estimation d'un débit de fuite d'air au moyen du taux de changement de pression interne au fil du temps ; et
d'introduction d'air dans des conditions de contrôle sélectionnées depuis l'extérieur du récipient vers l'intérieur du récipient à travers l'au moins une entrée de gaz en réponse au débit de fuite d'air estimé pour commander la composition relative des gaz à l'intérieur du récipient.

2. Procédé selon la revendication 1, dans lequel l'étape de mesure de la pression comprend en outre une étape de réponse à un changement de pression d'un élément répondant à la pression pour actionner un élément de contrôle.

3. Procédé selon la revendication 1 ou 2, dans lequel l'étape de retrait de gaz comprend le retrait sélectif de dioxyde de carbone par l'élément de membrane de sorte que le dioxyde de carbone gazeux soit extrait du récipient à un taux plus élevé que les autres gaz présents à l'intérieur du récipient.

4. Procédé selon l'une quelconque des revendications 1 à 3, dans lequel le procédé comprend en outre l'étape de suivi des niveaux d'au moins un composant de gaz à l'intérieur du récipient pour fournir au moins une lecture du niveau de composant de gaz.

5. Procédé selon la revendication 4, dans lequel l'étape d'introduction d'air est prise en réponse à l'au moins une lecture du niveau de composant de gaz.

6. Procédé selon l'une quelconque des revendications 1 à 5, dans lequel de l'air est introduit dans le récipient par l'au moins une entrée de gaz, entraîné par une différence de pression entre l'air à l'extérieur du récipient et tout vide léger à l'intérieur du récipient provoqué par l'extraction sélective ou le retrait sélectif de gaz depuis l'intérieur du récipient au moyen de la membrane.

7. Procédé selon l'une quelconque des revendications 1 à 6, dans lequel l'étape d'introduction d'air est réalisée de manière intermittente.

8. Procédé selon la revendication 4, dans lequel une étape de suivi du niveau d'oxygène est combinée avec la comparaison de ce niveau avec un point déterminé souhaité et ensuite avec l'introduction de l'air dans le récipient conformément aux conditions de contrôle sélectionnées.

9. Procédé selon la revendication 6, dans lequel l'élément de membrane présente une sélectivité qui permet au dioxyde de carbone gazeux de pénétrer par l'élément de membrane à un taux plus élevé que l'oxygène à un rapport CO₂:O₂ compris entre environ 2,5 et environ 15, et l'élément de membrane présente une sélectivité qui permet au dioxyde de carbone gazeux de pénétrer par l'élément de membrane à un taux plus élevé que l'azote a un rapport CO₂:N₂ compris entre environ 5 et environ 50.

10. Procédé selon l'une quelconque des revendications 1 à 9, dans lequel la membrane de sélectivité est fabriquée à partir de polydiméthylsiloxane (PDMS) ou d'acétate de cellulose.

11. Procédé selon l'une quelconque des revendications 1 à 10, dans lequel le procédé est mis en oeuvre sans aucun autre moyen de retrait, de conversion, d'absorption, d'extrait ou bien de dépôt. de dioxyde de carbone gazeux.

12. Procédé selon l'une quelconque des revendications 1 à 11, dans lequel l'étape d'estimation du débit de fuite d'air est réalisée au moyen d'un ordinateur qui répond à un programme informatique permettant de calculer un débit d'entrée en fonction de la différence de pression ou du taux de changement de différence de pression à l'intérieur du récipient et/ou de changement de différence de pression entre l'extérieur et l'intérieur du récipient.

13. Récipient destiné au stockage ou au transport d'un produit de respiration, le récipient comprenant :
des parois d'extrémité et latérales opposées, et un sol et un toit opposés définissant un vide destiné au stockage du produit ;
au moins une sortie de gaz et une unité de membrane sélective en communication fluidique avec la sortie de gaz de sorte que, lors de son utilisation, du gaz situé à l'intérieur du récipient puisse être tiré à travers celle-ci depuis l'intérieur du récipient vers l'extérieur du récipient ;
un souffleur ou ventilateur ou une unité d'extraction d'un autre gaz en communication fluidique avec l'unité de membrane permettant de tirer des gaz par l'unité de membrane ;
au moins une entrée de gaz pour introduire de l'air depuis l'extérieur du récipient vers l'intérieur du récipient ;
une première vanne pour contrôler le débit d'air à travers l'entrée de gaz ; et
un dispositif de mesure de pression permettant la mesure de la pression à l'intérieur du récipient à des intervalles sélectionnés de façon à calculer un taux de changement de pression interne au fil du temps ;
le dispositif de mesure de pression est relié de manière fonctionnelle à la première vanne, de façon à, lors de son utilisation, faire fonctionner la première vanne pour contrôler le débit d'air dans le récipient depuis l'extérieur du récipient en réponse à un débit de fuite d'air estimé pour régler la composition des gaz à l'intérieur du récipient.
